# FASCICULE DE BREVET EUROPEEN

(11) **EP 0 417 481 B1**
(45) Date de publication et mention de la délivrance du brevet: **14.07.1993**
(21) Numéro de dépôt: 90115363.5
(22) Date de dépôt: 10.08.1990
(51) Int. Cl.: A23L 1/238, A23L 1/20

(54) **Procédé de préparation d'une sauce de soya**
Verfahren zur Herstellung einer Sojasosse
Process for preparing a soy sauce

(30) Priorité: 12.09.1989 CH 3318/89
(43) Date de publication de la demande: 20.03.1991
(73) Titulaire: SOCIETE DES PRODUITS NESTLE S.A., 1800 Vevey (CH)
(72) Inventeur: Bajracharya, Rupak, Valencia, Cal. 91355 (US); Ho Dac, Thang, CH-1052 Le Mont S/Lausanne (CH); Wood, Robert Dustan, CH-1052 Le Mont S/Lausanne (CH)

(56) Documents cités:
- US-A- 4 115 591
- US-A- 4 117 169
- US-A- 4 587 127
- US-A- 4 684 527

## Description

La présente invention a pour objet un procédé de préparation d'une sauce de soya fermentée.

Un procédé oriental traditionnel de préparation d'une sauce de soya fermentée comprend principalement une première étape de préparation d'un koji, une deuxième étape de préparation et fermentation d'un moromi et une troisième étape de raffinage.

Selon ce procédé traditionnel, on mélange des fèves de soya cuites, et/ou une farine de soya dégraissée cuite, avec du blé rôti, on inocule le mélange avec une culture de koji ou avec une culture pure de spores d'Aspergillus oryzae et/ou d'Aspergillus sojae, on le cultive en aérobiose et on remue par intermittence durant environ un à quatre jours, et l'on obtient ainsi le koji. On mélange le koji avec une saumure contenant environ 22-25% en poids de chlorure de sodium, et l'on obtient ainsi le moromi. On laisse fermenter le moromi durant environ 6 à 8 mois, et l'on réalise le raffinage sous forme d'un filtrage et d'une pasteurisation.

Une sauce de soya fermentée obtenue par un procédé traditionnel tel que décrit ci-dessus présente une teneur en azote alpha-aminé relativement proche de 50% de l'azote total.

Un inconvénient majeur de ce procédé traditionnel est sa durée, nécessaire pour que la sauce acquière tout son arôme grâce à l'action lente et progressive, au cours de la fermentation du moromi, des enzymes produites lors de la préparation du koji, de microorganismes producteurs d'acide lactique et résistant à la haute teneur en sel (halophiles), notamment Pediococcus halophilus, et de levures productrices de substances aromatiques et d'alcool, notamment Saccharomyces rouxii.

C'est ainsi que divers procédés ont été proposés pour raccourcir cette durée. US 4684527 décrit, par exemple, un procédé consistant à préparer un koji, à l'hydrolyser et à mettre l'hydrolysat en contact avec une peptidase et une glutaminase immobilisées, en présence de sel.

De même, US 4587127 décrit, par exemple, un procédé consistant à hydrolyser un mélange cuit de soya dégraissé et de blé avec une solution d'enzymes extraites d'un koji, à mettre en contact l'hydrolysat avec des cellules immobilisées d'une bactérie lactique halophile, puis à le soumettre à une fermentation de quelques heures avec une levure de la sauce de soya.

Le procédé selon la présente invention a pour but non seulement de raccourcir la durée nécessaire à la production d'une sauce de soya fermentée, mais encore de permettre d'obtenir également une sauce de soya dont la qualité soit comparable à celle d'une sauce de soya fermentée obtenue par un procédé traditionnel tel que décrit en premier lieu ci-dessus.

A cet effet, dans le procédé de préparation d'une sauce de soya fermentée selon la présente invention, on prépare un koji par fermentation, avec une culture de koji, d'un mélange de soya cuit et de blé rôti, on hydrolyse le koji en suspension aqueuse durant 3-8 h à 45-60°C, de préférence durant 4-6h à 50-55°C,avec les enzymes produites durant la fermentation avec la culture de koji, on prépare un moromi en ajoutant du chlorure de sodium à la suspension de koji hydrolysée, on laisse fermenter le moromi, on le presse, on pasteurise le jus obtenu et on le clarifie.

Ce procédé permet effectivement de raccourcir considérablement la durée de l'étape de fermentation du mort tout en assurant une hydrolyse des protéines et des hydrates de carbone comparable à celle que l'on obtiendrait avec un procédé traditionnel tel que décrit en premier lieu ci-dessus. La durée de la fermentation du moromi peut ainsi être ramenée à environ 4 à 8 semaines, par exemple, au lieu de environ six à huit mois.

Dans le présent exposé, l'expression culture de koji signifie une culture de spores de koji telle qu'on peut s'en procurer dans le commerce, notamment au Japon ou en Chine, qui comprend en particulier des spores d'Aspergillus oryzae et/ou d'Aspergillus sojae.

Pour mettre en oeuvre le présent procédé, on utilise de préférence des fèves de soya entières. Cependant, dans une forme d'exécution particulière du présent procédé ou le jus obtenu après le pressage, la pasteurisation et la clarification est ultérieurement concentré, déshydraté et broyé, on peut utiliser aussi de la farine de soya dégraissée, par exemple.

On peut préparer ledit soya cuit en faisant tremper des fèves de soya concassées, autrement dit un gruau de soya, durant quelques heures et en le soumettant ensuite à une température de environ 120-140°C durant quelques minutes, par exemple, ce qui assure non seulement sa cuisson mais également sa stérilisation. On mélange de préférence ce gruau de soya cuit avec des grains de blé concassés rôtis, autrement dit un gruau de blé rôti, à raison de 50-90 parties en poids de matière sèche de soya et 10-50 parties en poids de blé.

Après l'avoir laissé refroidir à une température adéquate de environ 20-40°C, de préférence 30-35°C, on peut inoculer le mélange avec une culture de koji, ou avec une culture pure de spores d'A. oryzae ou d'A. sojae, à raison de environ une ou deux parties en poids de culture pour dix mille parties en poids du mélange. On peut ensuite laisser fermenter le mélange durant environ 30 à 50 h à 20-40°C sur des claies traditionnelles, sur un plateau ou dans un appareil du commerce spécialement conçu à cet effet, tout en brassant et aérant par intermittence, de préférence deux ou trois fois au total. Dans une forme d'exécution particulière du présent procédé, on laisse fermenter le mélange durant environ 20-30 h à 30-40°C puis durant 10-20 h à 20-30°C, ce qui favorise la production de protéase par la culture de koji.

On peut mettre le koji, qui peut présenter une teneur en matière sèche de environ 65-75%, en suspension aqueuse en le mélangeant avec de l'eau, à raison de une à trois parties en poids d'eau pour une partie en poids de koji. Cette suspension peut présenter un pH de environ 6,0-7,0 qui ne varie pratiquement que très peu durant l'hydrolyse.

On peut ajouter une relativement faible quantité de chlorure de sodium, à savoir 0-5%, de préférence 1-3% en poids dans la suspension avant l'hydrolyse. Cette adjonction éventuelle de chlorure de sodium a pour but d'exercer un effet de plasmolyse et de contribuer ainsi à la libération des enzymes. Le mélange et l'hydrolyse elle-même peuvent se faire, par exemple, dans une cuve à double manteau équipée d'un brasseur.

On réalise donc cette hydrolyse durant 3-8 h à 45-60°C, de préférence à 48-55°C. Cette hydrolyse a pour résultat essentiel de fournir dès le départ tous les nutriments nécessaires aux microorganismes qui interviennent dans la fermentation du moromi, alors que dans le procédé traditionnel décrit en premier lieu ci-dessus ces nutriments ne sont libérés qu'au fur et à mesure, à cause de la forte concentration en sel. Les conditions de cette hydrolyse doivent être strictement respectées pour obtenir un maximum de bénéfice sans risquer une contamination.

Les résultats obtenus par cette hydrolyse sont remarquables. En effet, pour un azote soluble total de environ 0,35% en poids de la suspension de koji et un azote alpha-aminé de environ 30% de l'azote total, par exemple, avant l'hydrolyse, on peut observer après trois, six et huit heures d'hydrolyse, des valeurs respectives de 1,2, 1,4 et 1,45% pour l'azote total, et 41, 48 et 49% pour l'azote alpha-aminé, par exemple.

Pour préparer le moromi, on peut ajouter alors à la suspension de koji hydrolysée une relativement forte quantité de chlorure de sodium, à savoir une quantité telle que le moromi présente une teneur en chlorure de sodium de environ 15-19% en poids.

La fermentation du moromi est de préférence induite en acidifiant le moromi jusqu'à un pH favorable au travail des levures de la sauce soya. Cette acidification peut être réalisée soit chimiquement, par addition d'acide lactique, par exemple, soit biologiquement, par inoculation avec une culture de bactérie lactique halophile. On peut inoculer le moromi avec une culture pure de Pediococcus halophilus, par exemple. On peut le faire à raison de 1-2% en volume d'une culture contenant environ 10⁷-10⁸ cellules du microorganisme par ml. On peut laisser travailler P.halophilus durant 2 jours à 2 semaines, de préférence durant 2-4 jours à 20-35°C de manière que le pH du moromi, initialement de environ 6,2, descende à une valeur de environ 4,8-5,5, de préférence 5,0-5,2.

On peut ensuite inoculer le moromi avec une culture pure d'une souche de levure de soya telle que Saccharomyces rouxii et/ou Torulopsis etchelsii, par exemple. On peut le faire à raison de 1-5% en volume d'une culture contenant 10⁷ - 10⁸ cellules de l'un ou l'autre ou d'un mélange de ces microorganismes. On peut alors laisser fermenter a environ 30-35°C, de préférence 32-34°C, durant deux semaines à deux ou trois mois, de préférence durant quatre à huit semaines, tout en brassant et en aérant au moins deux fois par semaine.

On peut alors presser le moromi, à l'aide d'une presse ou d'un filtre-presse par exemple, écarter les insolubles et pasteuriser le jus obtenu à une température de 75-90°C durant 15-30 min, par exemple. Après la pasteurisation, on laisse de préférence reposer ce jus durant environ 1 à 7 jours, de manière que des particules insolubles non écartées lors du pressage puissent sédimenter, puis on le clarifie, en le faisant passer au travers d'un papier filtre, par exemple.

Le présent procédé permet d'obtenir ainsi une sauce de soya fermentée présentant un goût et un arôme comparables à ceux d'une sauce de soya fermentée obtenue par un procédé traditionnel tel que décrit en premier lieu ci-dessus.

Dans une forme d'exécution particulière du présent procédé, on concentre le jus clarifié, on le déshydrate et on le broye pour présenter la sauce de soya fermentée sous forme d'une poudre que l'on peut utiliser comme condiment ou reconstituer ensuite avec de l'eau, à raison de deux ou trois parties en poids d'eau pour une partie en poids de poudre.

Pour mettre en oeuvre cette forme d'exécution particulière, on peut concentrer le jus clarifié par évaporation à une température de environ 55-65°C sous une pression réduite de environ 100-250 mbar durant environ 30 min-3h. On peut concentrer ainsi la sauce, qui présente une teneur en matière sèche de environ 30-34% en poids, jusqu'à une teneur en matière sèche de environ 60-85% en poids.

On peut ensuite déshydrater le jus concentré jusqu'à une teneur en matière sèche de environ 95-99% en poids, dans un séchoir sous pression réduite par exemple, où il peut être soumis à une température de environ 60-100°C sous une pression de environ 10-100 mbar durant environ 1-10 h.

On peut enfin broyer le jus déshydraté, dans un moulin à marteau par exemple, de manière à obtenir une sauce de soya fermentée en poudre formée de particules dont le plus grand nombre présentent des dimensions comprises entre environ 0,5 et 2 mm.

Pour cette forme d'exécution particulière du présent procédé, on peut également prévoir d'hydrolyser le koji en suspension aqueuse en mélange avec du soya cuit non fermenté, par exemple. On peut obtenir ainsi une sauce de soya fermentée déshydratée et broyée de bonne qualité à partir de l'hydrolyse d'un mélange comprenant environ une à deux parties en poids de matière sèche de soya cuit non fermenté pour une à deux parties en poids de matière sèche de koji, par exemple.

Les exemples ci-après sont donnés à titre d'illustration du procédé selon la présente invention. Les pourcentages et parties y sont indiqués en poids, sauf indication contraire.

### Exemple 1

On trempe un gruau de soya entier dans l'eau à température ambiante durant 3 h. On cuit et on stérilise le gruau trempé à 130°C durant 4 min et on le refroidit à 30-35°C. On mélange ce gruau de soya avec un gruau de blé rôti, à raison de 70% de matière sèche de soya pour 30% de matière sèche de blé. On inocule ce mélange avec une culture de koji, à raison d'une partie de culture ou poudre de spores pour dix mille parties de mélange. On laisse fermenter le mélange sur des claies durant 44 h tout en le brassant et en l'aérant deux fois au total.

On met en suspension aqueuse 50 kg du koji ainsi obtenu, qui présente une teneur en matière sèche de 70%, en les mélangeant avec 80 kg d'eau et 1,9 kg de chlorure de sodium, dans une cuve à double manteau munie d'un brasseur. On réalise l'hydrolyse de cette suspension de koji en portant sa température à 54°C et en l'y maintenant durant 5 h tout en brassant. On brasse lentement au début puis, la viscosité de la suspension diminuant progressivement au cours de l'hydrolyse on accélère la vitesse de rotation du brasseur jusqu'à environ 100 tours/min. Le pH de la suspension qui est de 6,3 avant l'hydrolyse descend progressivement à 6,2 durant ces 5 h d'hydrolyse.

La suspension de koji ainsi hydrolysée présente une teneur en azote total soluble de 1,37% et une teneur en azote alpha-aminé égale à 47% de cet azote total.

On prépare un moromi en ajoutant 17 kg de chlorure de sodium à cette suspension de koji hydrolysée. On inocule le moromi avec 1% en volume d' une culture de Pediococcus halophilus contenant 10⁷-10⁸ cellules du microorganime par ml. On laisse fermenter à 30°C durant 3 j au cours desquels le pH du moromi descend à une valeur de 5,0-5,2.

On inocule ensuite le moromi ainsi acidifié avec 3% en volume d'une culture mixte de Saccharomyces rouxii et de Torulopsis etchelsii contenant environ 5.10⁸ cellules de chacun de ces microorganismes par ml. On laisse fermenter à 33°C durant huit semaines.

On presse le moromi à l'aide d'une presse. On recueille le jus et on le pasteurise à 85°C durant 20 min. On laisse reposer le jus pasteurisé durant 6 j, on écarte les insolubles qui ont sédimenté et on clarifie le jus en le faisant passer au travers d'un papier filtre.

On obtient une sauce de soya fermentée dont le goût et l'arôme sont comparables à ceux d'une sauce soya obtenue par un procédé traditionnel tel que décrit en premier lieu ci-dessus.

### Exemple 2

On procède de la manière décrite à l'exemple 1, à l'exception du fait que l'on réalise l'hydrolyse de la suspension de koji durant 8 h au lieu de 5 h et que l'on laisse fermenter le moromi durant quatre semaines au lieu de huit semaines.

La suspension de koji hydrolysée présente une teneur en azote total soluble de 1,45% et une teneur en azote alpha-aminé égale à 49% de cet azote total.

La sauce de soya fermentée obtenue après une fermentation du moromi de quatre semaines seulement présente un goût et un arôme comparables à ceux de la sauce de soya fermentée obtenue à l'exemple 1.

### Exemple 3

On prépare un koji de la manière décrite à l'exemple 1, à l'exception du fait que l'on utilise un gruau de soya cuit et un gruau de blé rôti à raison de 90% de matière sèche du premier et 10% de matière sèche du second, au lieu de 70% et 30%.

On mélange 25 kg de ce koji, qui présente une teneur en matière sèche de environ 60%, et 36 kg de gruau de soya cuit et stérilisé, qui présente une teneur en matière sèche de environ 47%. On met le mélange en suspension aqueuse en le brassant avec 57 kg d'eau dans une cuve à double manteau munie d'un brasseur. On ajoute 1 kg de chlorure de sodium.

On réalise l'hydrolyse de cette suspension en portant sa température à 52°C durant 5 h.

On prépare un moromi en ajoutant 17 kg de chlorure de sodium à cette suspension hydrolysée. On procède ensuite de la manière décrite à l'exemple 1 jusqu'à l'obtention du jus clarifié.

On concentre ce jus à une température de environ 62°C sous une pression réduite de 100 mbar durant environ 2h30min jusqu'à une teneur en matière sèche de environ 80%.

On déshydrate ensuite ce jus concentré jusqu'à une teneur en matière sèche de 98% dans un séchoir sous pression réduite où il est soumis à une température de 65-85°C durant environ 6 h sous une pression de 50 mbar.

On broye ce jus déshydraté dans un moulin à marteau muni d'une grille à mailles carrées d'un de côté.

On obtient une sauce de soya fermentée en poudre que l'on peut utiliser comme condiment ou reconstituer en la dispersant dans de l'eau, à raison d'une partie de poudre pour deux parties d'eau. La sauce ainsi reconstituée présente un goût typique d'une sauce de soya fermentée de bonne qualité.

## Revendications

1. Procédé de préparation d'une sauce de soya fermentée, dans lequel on prépare un koji par fermentation, avec une culture de koji, d'un mélange de soya cuit et de blé rôti, on hydrolyse le koji en suspension aqueuse durant 3-8 h à 45-60°C avec les enzymes produits durant la fermentation avec la culture de koji, on prépare un moromi en ajoutant du chlorure de sodium à la suspension de koji hydrolysée, on laisse fermenter le moromi, on le presse, on pasteurise le jus obtenu et on le clarifie.

2. Procédé selon la revendication 1, caractérisé par le fait que l'on met le koji en suspension aqueuse en le mélangeant avec de l'eau, à raison de une à trois parties en poids d'eau pour une partie en poids de koji, et que l'on ajoute 0-5% de chlorure de sodium dans la suspension, avant de l'hydrolyser.

3. Procédé selon la revendication 1, caractérisé par le fait que l'on ajoute du chlorure de sodium à la suspension de koji hydrolysée en quantité telle que le moromi ainsi préparé présente une teneur en chlorure de sodium de 15-19% en poids.

4. Procédé selon la revendication 1, caractérisé par le fait que, pour préparer le koji, on mélange, en en poids de matière sèche, 50-90% de fèves de soya concassées cuites et 10-50% de grains de blé rôtis concassés, on inocule ce mélange de soya cuit et de blé rôti avec une culture de koji et on le laisse fermenter durant 30-50 h à 20-40°C tout en brassant par intermittence.

5. Procédé selon la revendication 4, caractérisé par le fait que l'on laisse fermenter le mélange de soya cuit et de blé rôti durant 20-30 h à 30-40°C puis durant 10-20 h à 20-30°C.

6. Procédé selon la revendication 1, caractérisé par le fait que l'on hydrolyse le koji en suspension aqueuse durant 4-6 h à 50-55°C.

7. Procédé selon la revendication 1, caractérisé par le fait qu'après avoir préparé le moromi, on ajuste son pH à 4,8-5,5 par acidification biologique ou chimique, on l'inocule avec une culture de levure et on le laisse fermenter durant 2 semaines à 3 mois à 30-35°C tout en brassant et en aérant par intermittence.

8. Procédé selon la revendication 7, caractérisé par le fait que l'on ajuste le pH du moromi à 5,0-5,2 par acidification à l'aide d'une culture de Pediococcus halophilus, on inocule le moromi avec une culture de Saccharomyces rouxii et/ou de Torulopsis etchelsii et on laisse fermenter durant 3-6 semaines à 32-34°C tout en brassant et aérant au moins deux fois par semaine.

9. Procédé selon la revendication 1, caractérisé par le fait que l'on pasteurise ledit jus à 75-90°C durant 15-30 min et on le laisse reposer durant 1-7 j avant de le clarifier.

10. Procédé selon la revendication 9, caractérisé par le fait que l'on concentre le jus clarifié jusqu'à une teneur en matière sèche de 60-85% en poids, on le déshydrate jusqu'à une teneur en matière sèche de 95-99% en poids et on le réduit en poudre.

## Patentansprüche

1. Verfahren zur Herstellung einer fermentierten Sojasoße, bei welchem man durch Fermentation eines Gemisches aus gekochten Sojabohnen und aus geröstetem Getreide mit einer Koji-Kultur ein Koji herstellt, das Koji in wässeriger Suspension während 3 bis 8 h bei 45 bis 60°C mit den Enzymen hydrolysiert, die während der Fermentation mit der Koji-Kultur produziert worden sind, ein Moromi dadurch herstellt, daß man zu der hydrolysierten Koji-Suspension Natriumchlorid zusetzt, das Moromi fermentieren läßt, dasselbe preßt, den so erhaltenen Saft pasteurisiert und denselben klärt.

2. Verfahren nach Anspruch 1, dadurch gekennzeichnet, daß man das Koji dadurch in wässerige Suspension bringt, daß man dasselbe in einer Menge von 1 bis 3 Gew.-Teilen Wasser auf 1 Gew.-Teil Koji mit Wasser vermischt, und daß man zu der Suspension 0 bis 5 % Natriumchlorid hinzufügt, bevor man dieselbe hydrolysiert.

3. Verfahren nach Anspruch 1, dadurch gekennzeichnet, daß man das Natriumchlorid zu der hydrolysierten Koji-Suspension in einer solchen Menge zusetzt, daß das so hergestellte Moromi einen Natriumchloridgehalt von 15 bis 19 Gew.-% aufweist.

4. Verfahren nach Anspruch 1, dadurch gekennzeichnet, daß man zur Herstellung des Koji 50 bis 90 % gekochte und zerkleinerte Sojabohnen und 10 bis 50 % geschrotete und geröstete Getreidekörner, ausgedrückt in Gew.-%, bezogen auf die Trockenzubstanz, vermischt, daß man dieses Gemisch aus gekochten Sojabohnen und geröstetem Getreide mit einer Koji-Kutur beimpft, und daß man das Gemisch währen 30 bis 50 h bei 20 bis 40°C unter intermittierendem Umrühren fermentieren läßt.

5. Verfahren nach Anspruch 4, dadurch gekennzeichnet, daß man das Gemisch aus gekochten Sojabohnen und aus geröstetem Getreide während 20 bis 30 h bei 30 bis 40°C und anschließen während 10 bis 20 h bei 20 bis 30°C fermentieren läßt.

6. Verfahren nach Anspruch 1, gekennzeichnet, daß man das Koji in wässeriger Suspension während 4 bis 6 h bei 50 bis 55°C hydrolysiert.

7. Verfahren nach Anspruch 1, dadurch gekennzeichnet, daß man, nachdem man das Moromi hergestellt hat, durch biologische oder chemische Ansäuerung dessen pH-Wert auf 4,8 bis 5,5 einstellt, daß man das Moromi mit einer Hefekultur beimpft, und daß man dasselbe während 2 Wochen bis zu 3 Monaten bei 30 bis 35°C unter intermittierendem Umrühren und Belüften fermentieren läßt.

8. Verfahren nach Anspruch 7, dadurch gekennzeichnet, daß man den pH-Wert des Moromi durch Ansäuern mit Hilfe einer Kultur von Pedicoccus halophilus auf 5,0 bis 5,2 einstellt, daß man das Moromi mit einer Kultur von Saccharomyces rouxii und/oder Torulopsis etchesii beimpft, und daß man dasselbe während 3 bis 6 Wochen bei 32 bis 34°C unter wenigstens zweimaligem Umrühren und Belüften pro Woche fermentieren läßt.

9. Verfahren nach Anspruch 1, dadurch gekennzeichnet, daß man den gennanten Saft bei 75 bis 90°C während 15 bis 30 min parteurisiert, und daß man denselben während 1 bis 7 Tagen rasten läßt, bevor man ihn klärt.

10. Verfahren nach Anspruch 9, dadurch gekennzeichnet, daß man den geklärten Saft bis auf einen Gehalt an Trockensubstanz von 60 bis 85 Gew.-% konzentriert, daß man denselben bis auf einen Gehalt an Trockensubtanz von 95 bis 99 Gew.-% dehydratisiert, und daß man denselben zu einem Pulver zerkleinert.

## Claims

1. A process for the production of a fermented soya sauce, characterized in that a koji is prepared by fermentation with a koji culture of a mixture of cooked soya and roasted wheat, the koji is hydrolyzed in aqueous suspension for 3 to 8 hours at 45 to 60°C with the enzymes produced during fermentation with the koji culture, a moromi is prepared by addition of sodium chloride to the hydrolyzed koji suspension, the moromi is left to ferment and is then pressed and the liquor obtained is pasteurized and clarified.

2. A process as claimed in claim 1, characterized in that the koji is suspended in water by mixing with water in a ratio of 1 to 3 parts by weight water to 1 part by weight koji and in that 0 to 5% sodium chloride is added to the suspension before hydrolysis.

3. A process as claimed in claim 1, characterized in that sodium chloride is added to the hydrolyzed koji suspension in such a quantity that the moromi thus prepared has a sodium chloride content of 15 to 19% by weight.

4. A process as claimed in claim 1, characterized in that, to prepare the koji, 50 to 90%, based on solids, crushed cooked soya beans and 10 to 50%, based on solids, crushed roasted wheat grains are mixed, the resulting mixture of cooked soya and roasted wheat is inoculated with a koji culture and is then left to ferment for 30 to 50 hours at 20 to 40°C with intermittent stirring.

5. A process as claimed in claim 4, characterized in that the mixture of cooked soya and roasted wheat is left to ferment for 20 to 30 hours at 30 to 40°C and then for 10 to 20 hours at 20 to 30°C.

6. A process as claimed in claim 1, characterized in that the koji is hydrolyzed in aqueous suspension for 4 to 6 hours at 50 to 55°C.

7. A process as claimed in claim 1, characterized in that, after its preparation, the moromi is adjusted to pH 4.8 - 5.5 by biological or chemical acidification, inoculated with a culture of yeast and left to ferment for 2 weeks to 3 months at 30 to 35°C with intermittment stirring and aeration.

8. A process as claimed in claim 7, characterized in that the moromi is adjusted to pH 5.0 - 5.2 by acidification with a culture of Pediococcus halophilus, the moromi is inoculated with a culture of Saccharomyces rouxii and/or Torulopsis etchelsii and is left to ferment for 3 to 6 weeks at 32 to 34°C with stirring and aeration at least twice a week.

9. A process as claimed in claim 1, characterized in that the liquor is pasteurized for 15 to 30 minutes at 75 to 90°C and is then left standing for 1 to 7 days before being clarified.

10. A process as claimed in claim 9, characterized in that the clarified liquor is concentrated to a solids content of 60 to 85% by weight, dehydrated to a solids content of 95 to 99% by weight and reduced to powder.
